# EUROPEAN PATENT SPECIFICATION

(11) **EP 0 767 327 B1**
(45) Date of publication and mention of the grant of the patent: **19.01.2000**
(21) Application number: 96115945.6
(22) Date of filing: 04.10.1996
(51) Int. Cl.: F16H 61/00

(54) **Automatic transmission**
Automatisches Getriebe
Transmission automatique

(30) Priority: 06.10.1995 JP 26016795
(43) Date of publication of application: 09.04.1997
(73) Proprietor: AISIN AW CO., LTD., Anjo-shi Aichi-ken (JP)
(72) Inventor: Taniguchi, Takao, Anjo-shi, Aichi-ken, 444-11 (JP); Miki, Nobuaki, Anjo-shi, Aichi-ken, 444-11 (JP); Kano, Takenori, Anjo-shi, Aichi-ken, 444-11 (JP); Morishita, Toshiya, Anjo-shi, Aichi-ken, 444-11 (JP); Ogasawara, Naoto, Anjo-shi, Aichi-ken, 444-11 (JP); Murakami, Naotaka, Anjo-shi, Aichi-ken, 444-11 (JP); Kiyama, Ken, Anjo-shi, Aichi-ken, 444-11 (JP)
(74) Representative: VOSSIUS & PARTNER

(56) References cited:
- EP-A- 0 284 216
- DE-A- 4 232 205
- DE-C- 4 415 133
- US-A- 5 361 650

## Description

The present invention relates to an automatic transmission.

In the prior art, the automatic transmission changes the speeds automatically in accordance with the running conditions. In a gear type automatic transmission, for example, a gear stage according to a running condition is automatically selected and achieved. For this achievement, a control system is arranged to control the various solenoid valves of a hydraulic circuit on the basis of the running conditions detected by various sensors or the like, so that it changes the combination of the gears to change the gear ratio corresponding to that combination.

Incidentally, the aforementioned control system is packaged so that it is arranged as an electronic control unit in a vehicular compartment. On the other hand, the electric parts such as the solenoid valves or the sensors are arranged together with the automatic transmission in the engine room because they have to be fixed on the automatic transmission. In the automatic transmission of the prior art, however, the number of steps of adjusting the entirety of the automatic transmission system constructed of the automatic transmission and the control system is seriously increased, if intended.

Specifically, the automatic transmission and the electronic control unit are arranged at discrete positions so that they are manufactured separately of each other and are combined with each other when they are mounted on the vehicle. This makes it necessary not only for the automatic transmission and the electronic control unit to be adjusted at their manufacturing stage before they are mounted on the vehicle but also for the entire automatic transmission system to be adjusted after they are mounted on the vehicle. As a result, the number of adjusting steps is seriously increased.

Moreover, the the automatic transmission and electronic control unit are arranged at a distance from each other so that the cords to be wired inbetween are elongated to raise the cost and to complicate the wiring operation thereby to trouble the wiring works.

It is, therefore, conceivable to attach the electronic control unit to the casing of the automatic transmission.

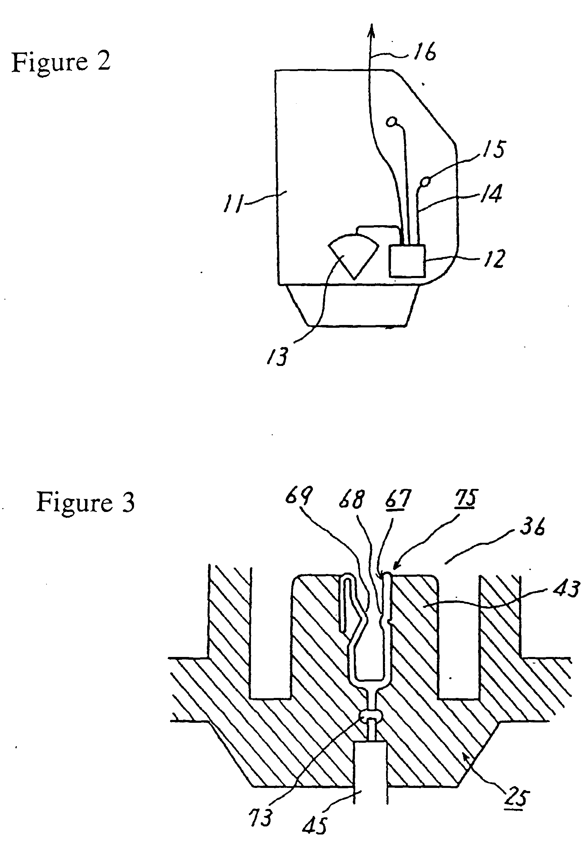

Fig. 2 is a diagram showing the state of the prior art, in which an automatic transmission is mounted.

In Fig. 2: reference numeral 11 designates the casing of an automatic transmission; numeral 12 an electronic control unit mounted on the casing 11; numeral 13 a neutral switch; numeral 14 a cord; numeral 15 a sensor; and numeral 16 a cord extending into the vehicle compartment and connected with the not-shown control unit and electric parts (including a mode switch and an engine controlling computer). Incidentally, the electronic control unit 12 and the cord 14, and the sensor 15 and the cord 14 are individually connected by not-shown connectors.

Since the electronic control unit 12 is thus mounted on the casing 11, the automatic transmission system can be adjusted in its entirety before the automatic transmission and the electronic control unit 12 are mounted on the vehicle. This makes it possible to reduce the number of adjusting steps.

Moreover, since the cord 14 to be arranged between the automatic transmission and the electronic control unit 12 can be shortened, the cost can be reduced, and the wiring operation can be simplified to lighten the wiring works.

If, however, the electronic control unit 12 is arranged in the engine room, it may be contaminated with muddy water or the like. It is, therefore, necessary to provide a seal structure for the electronic control unit 12 itself and the connector connecting the electronic control unit 12 and the cord 14. As a result, the number of parts is increased to raise the cost.

US-A-5 361 650 discloses a transmission with an externally mounted electronic control unit according to the preamble of claim 1.

DE-A-4 232 205 discloses a valve control with a sealed coil and yoke manufactured by injection moulding.

The present invention has an object to solve the above-specified problems of the automatic transmission of the prior art and to provide an automatic transmission which is enabled to reduce the number of steps of adjusting the automatic transmission system in its entirety, to reduce the cost, to simplify the wiring operation, to lighten the wiring works, to have a high sealing property, and to reduce the number of parts. This object is achied with the features of the claims.
Fig. 1 is a sectional view showing a sealing wire terminal according to a first embodiment of the present invention;
Fig. 2 is a diagram showing the state of the prior art, in which an automatic transmission is mounted;
Fig. 3 is an enlarged section showing a connection portion of the sealing wire terminal according to the first embodiment of the present invention;
Fig. 4 is a sectional diagram showing an electronic control unit in the first embodiment of the present invention;
Fig. 5 is a top plan view showing the electronic control unit in the first embodiment of the present invention;
Fig. 6 is a transverse section showing a sealing wire terminal according to a second embodiment of the present invention;
Fig. 7 is a longitudinal section showing the sealing wire terminal according to the second embodiment of the present invention;
Fig. 8 is an exploded diagram showing the sealing wire terminal according to the second embodiment of the present invention; and
Fig. 9 is a sectional diagram showing a sealing wire terminal in a third embodiment of the present invention.

The embodiments of the present invention will be described in detail with reference to the accompanying drawings.

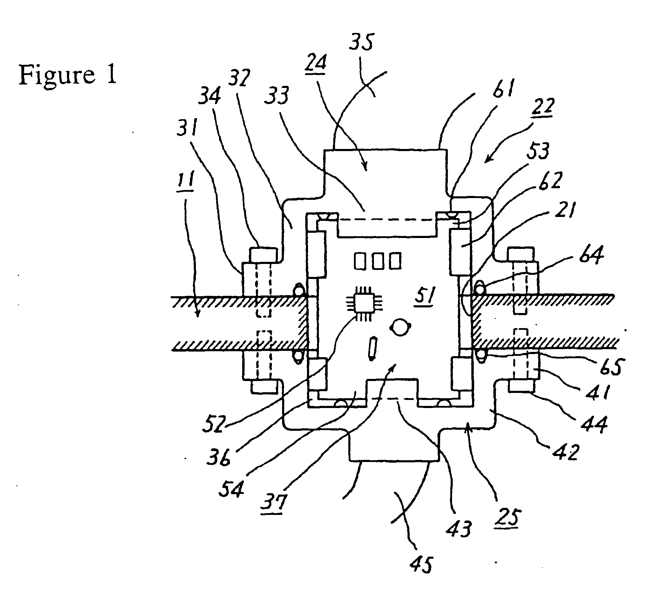

Fig. 1 is a sectional view showing a sealing wire terminal according to a first embodiment of the present invention.

In Fig. 1, reference numeral 11 designates the casing of an automatic transmission. The not-shown electronic parts such as a control switch is arranged on the outer side (as located at the upper side of Fig. 1) of the casing 11, and the not-shown speed change mechanism and the not-shown electronic parts such as a solenoid or a sensor are arranged on the inner side (as located at the lower side of Fig. 1) of the same.

In the casing 11, on the other hand, there is formed a through hole 21 for providing the communication between the outside and inside of the casing in a predetermined portion of the casing 11. In this through hole 21, there is inserted a sealing wire terminal 22.

This sealing wire terminal 22 is provided with two cases 24 and 25 made of a resin highly resisting to heat and oil. Of these, the case 24 is arranged on the outer side of the casing 11, and the case 25 is arranged on the inner side. Moreover, the case 24 is composed of: a flange portion 31 to be brought into abutment against the surface of the outer side of the casing 11; a recess portion 32 formed to bulge from the flange portion 31 to the outside of the casing 11; and a connection portion 33 formed at the bottom face of the recess portion 32. The case 24 thus composed is fixed on the casing 11 by means of bolts 34 arranged through the flange portion 31. On the other hand, the case 25 is composed of: a flange portion 41 to be brought into abutment against the surface of the inner side of the casing 11; a recess portion 42 formed to bulge from the flange portion 41 to the inside of the casing 11; and a connection portion 43 formed t the bottom face of the recess portion 42. The case 25 thus composed is fixed on the casing 11 by means of bolts 44 arranged through the flange portion 41.

When the cases 24 and 25 are so fixed on the casing 11 as to confront each other, a space 36 is defined by the two recess portions 32 and 42. In this space 36, there is arranged an electronic control unit 37 in which a control system is packaged. This electronic control unit 37 is composed of a board 51 made of ceramics and a chip 52 packaged on the board 51.

Here, this electronic control unit 37 has to be electrically connected with both the electric parts arranged outside of the casing 11 and the electric parts arranged inside of the casing 11.

Thus, the electronic control unit 37 and a cord 35 are electrically connected by the connection portion 33, and the electronic control unit 37 and a cord 45 are electrically connected by the connection portion 43, so that the electronic control unit 37 is held by those connection portions 33 and 43.

In this case, no part is required for fixing the electronic control unit 37 on the sealing wire terminal 22 so that the number of parts can be reduced.

Thus, the not-shown electrodes are formed at the end portions 53 and 54 of the electronic control unit 37, and the not-shown connectors are formed at those portions of the connection portions 33 and 43, which correspond to the aforementioned electrodes.

From the inner circumferences of the cases 24 and 25, on the other hand, there are protruded board fixing guides 61 and 62 for guiding the electronic control unit 37 in position.

In the faces of the flange portions 31 and 41, as confronting the casing 11, there are circumferentially arranged seal rings 64 and 65 acting as seal members. These seal rings 64 and 65 can cut off the communications between the inside of the space 36 and the outsides of the case 24 and 25 and the communication between the inside and outside of the casing 11.

Here will be described the aforementioned connection portions 33 and 43.

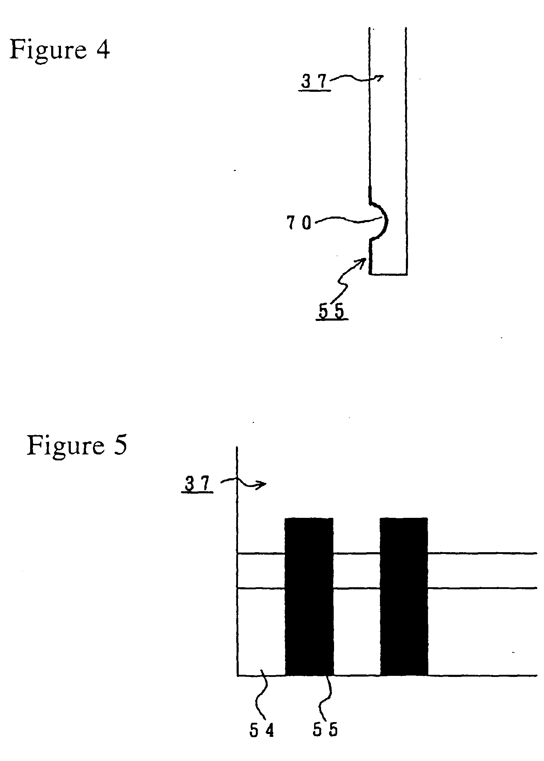

Fig. 3 is an enlarged section showing a connection portion of the sealing wire terminal according to the first embodiment of the present invention; Fig. 4 is a sectional diagram showing an electronic control unit in the first embodiment of the present invention; and Fig. 5 is a top plan view showing the electronic control unit in the first embodiment of the present invention.

Incidentally, the following description is directed to only the connection portion 43 because the connection portions 33 and 43 (of Fig. 1) have identical constructions.

In these Figures: reference numeral 25 designates the case; numeral 43 the connection portion projected from the case 25; numeral 36 the space for confining the electronic control unit 37; and numeral 45 a cord for electrically connecting the electronic control unit 37 and the not-shown electric parts inside of the casing 11. In the connection port 43, there is arranged a connector 75 having a plurality of electrodes 67, and this connector 75 and the cord 45 are connected by means of solder 73. This connected portion of the connector 75 and the cord 45 is enclosed with the resin of the case 25. On the other hand, the individual electrodes 67 are made of elastic metal strips having inward projections 68 and 69.

Moreover, a plurality of electrodes 55, as corresponding to the individual electrodes 67, are formed at the end portions 54 of the electronic control unit 37. These electrodes 67 and 55 are electrically connected by inserting the end portion 54 of the electronic control unit 37 into the connector 75.

In addition, each of the electrodes 55 has a groove 70 which is positioned to correspond to the projection 69 so that it is prevented from coming out by the projection 69 and the groove 70.

Thus, the automatic transmission and the electronic control unit 37 can be arranged close to each other so that they can be combined before they are mounted on the vehicle. As a result, the number of steps for adjustments can be reduced because what is required is to adjust the automatic transmission system as a whole after it is mounted on the vehicle.

Since the automatic transmission and the electronic control unit 37 are arranged close to each other, the cord for connecting the two can be shortened to lower the cost, simplify the wiring lines and lighten the works.

Moreover, the electronic control unit 37 is mounted in the space 36, and the inside of this space 36 and the outsides of the cases 24 and 25 are sealed up by the seal rings 64 and 65, so that the electronic control unit 37 can be prevented from being contaminated by the muddy water or the like. As a result, the sealing function of the sealing wire terminal 22 can be utilized for sealing the electronic control unit 37 itself and the connector 75 so that the electronic control unit 37 itself and the connector 75 need not be given a seal structure. As a result, the number of parts can be reduced to lower the cost.

On the other hand, the electronic control unit 37 is arranged in the sealing wire terminal 22, but the other functional parts are not arranged in the same cases 24 and 25, so that the functional parts need not be taken into consideration when the electronic control unit 37 is replaced. As a result, the workability for replacing the electronic control unit 37 can be improved.

Merely by loosening the bolts 34 to remove the case 24, the electronic control unit 37 can be taken out of the space 36. This makes it possible to improve the workability for replacing the electronic control unit 37.

Here will be described a second embodiment of the present invention.

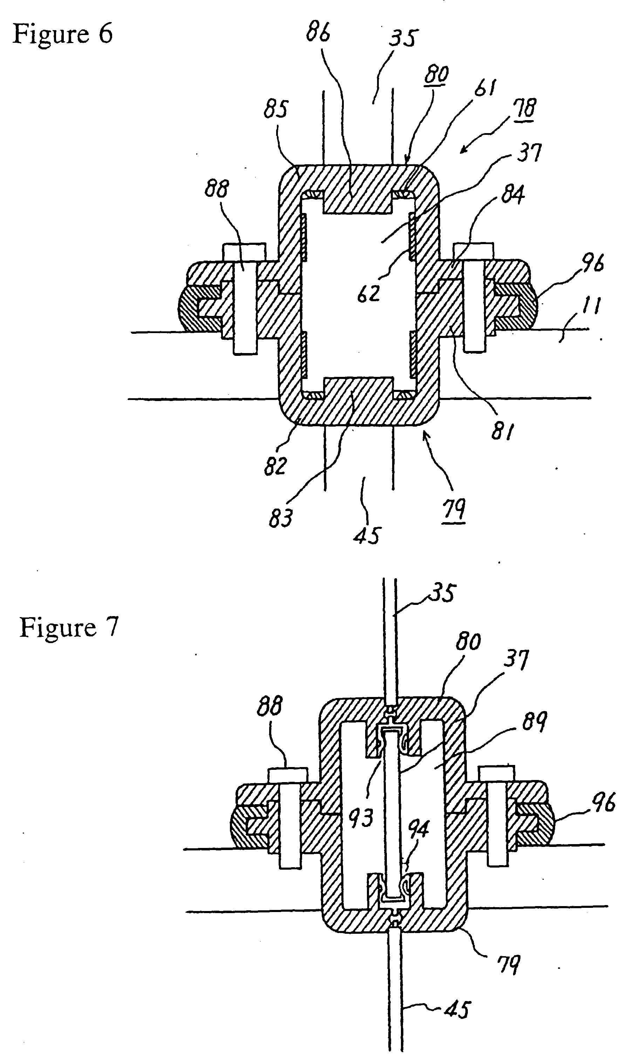

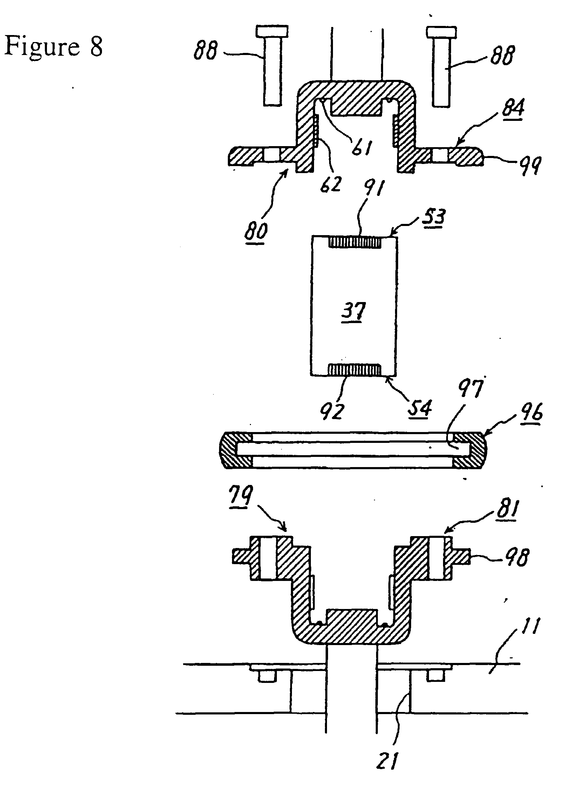

Fig. 6 is a transverse section showing a sealing wire terminal according to a second embodiment of the present invention; Fig. 7 is a longitudinal section showing the sealing wire terminal according to the second embodiment of the present invention; and Fig. 8 is an exploded diagram showing the sealing wire terminal according to the second embodiment of the present invention.

In these Figures, numeral 11 designates the casing of an automatic transmission. The not-shown electronic parts such as a control switch is arranged on the outer side (as located at the upper side of Fig. 1) of the casing 11, and the not-shown speed change mechanism and the not-shown electronic parts such as a solenoid or a sensor are arranged on the inner side (as located at the lower side of Fig. 1) of the same.

In the casing 11, on the other hand, there is formed a through hole 21 for providing the communication between the outside and inside of the casing in a predetermined portion of the casing 11. In this through hole 21, there is inserted a sealing wire terminal 22.

This sealing wire terminal 78 is provided with two cases 79 and 80 made of a resin highly resisting to heat and oil. of these, the case 79 is arranged to face the inner side of the casing 11, and the case 80 is arranged on the outer side of the case 79. Moreover, the case 79 is composed of: a flange portion 81 to be brought into abutment against the surface of the outer side of the casing 11; a recess portion 82 formed to bulge from the flange portion 81 to the inner side of the casing 11; and a connection portion 83 formed at the bottom face of the recess portion 82. On the other hand, the case 80 is composed of: a flange portion 84 to be brought into abutment against the surface of the outer side of the flange portion 81; a recess portion 85 formed to bulge from the flange portion 84 to the outside of the casing 11; and a connection portion 86 formed at the bottom face of the recess portion 85. Moreover, the cases 79 and 80 are fixed on the casing 11 by means of bolts 88 arranged through the flange portions 81 and 84.

When the cases 79 and 80 are so fixed on the casing 11 as to confront each other, a space 89 is defined by the two recess portions 82 and 85. In this space 89, there is arranged an electronic control unit 37 in which a control system is packaged.

Here, this electronic control unit 37 has to be electrically connected with both the electric parts arranged outside of the casing 11 and the electric parts arranged inside of the casing 11. Thus, the electronic control unit 37 and a cord 35 are electrically connected by the connection portion 86, and the electronic control unit 37 and a cord 45 are electrically connected by the connection portion 83, so that the electronic control unit 37 is held by those connection portions 83 and 86.

Thus, the not-shown electrodes 91 and 92 are formed at the end portions 53 and 54 of the electronic control unit 37, and connectors 93 and 94 are formed at those portions of the connection portions 83 and 86, which correspond to the aforementioned electrodes 91 and 92.

From the inner circumferences of the cases 79 and 80, on the other hand, there are protruded board fixing guides 61 and 62 for guiding the electronic control unit 37 in position.

Moreover, a seal ring 96 is arranged as a seal member on the outer circumference of the flange portion 81. The seal ring 96 has a section of letter "C" formed with a groove 97 in its inner circumference, and the flange portion 81 is formed with an annular ridge 98 corresponding to the groove 97. In the flange portion 84, there is formed an annular holding portion 99 which is radially protruded from the flange portion 81.

As a result, when the flange portions 81 and 84 are fixed on the casing 11 by the bolts 88, the seal ring 96 can be pushed onto the surface of the outer side of the casing by the holding portion 99 thereby to seal up the flange portion 81 and the casing 11, and the flange portion 81 and the flange portion 84. As a result, the seal ring 96 can seal up not only the inside of the space 89 and the outsides of the cases 79 and 80 but also the inside and outside of the casing 11.

Incidentally, the automatic transmission is arranged in the limited space of the engine room. As the sealing wire terminals 22 (as shown in Fig. 1) and 78 (as shown in Fig. 6) protrude largely to the outside of the casing 11, they may interfere with the other parts such as the battery.

Thus, here will be described a third embodiment in which the electronic control unit 37 and the casing 11 are arranged in parallel.

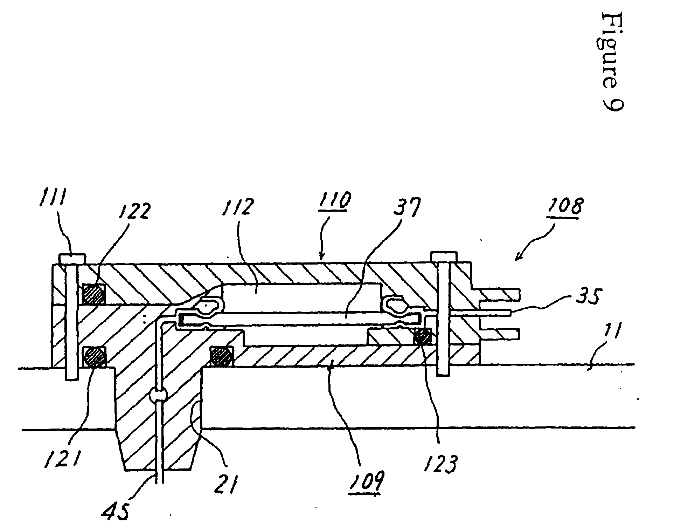

Fig. 9 is a sectional diagram showing a sealing wire terminal in a third embodiment of the present invention.

In Fig. 9, reference numeral 11 designates the casing of an automatic transmission. In a preset portion of the casing 11, there is formed a through hole 21 for providing the communication between the outside and inside of the casing 11. A sealing wire terminal 108 is inserted into the through hole 21.

This sealing wire terminal 108 is provided with two cases 109 and 110 made of a resin highly resisting to heat and oil. Of these, the case 109 is arranged to face the inner side of the casing 11, and the case 110 is arranged on the outer side of the case 109.

When the cases 109 and 110 are fixed to confront each other on the case 11 by means of bolts 111, a space 112 is formed. In this space 112, there is arranged the electronic control unit 37 which is prepared by packaging the control system.

Since the electronic control unit 37 and the casing 11 are arranged in parallel, the sealing wire terminal 108 is not largely protruded to the outer side of the casing 11. As a result, the sealing wire terminal 108 and the other parts such as the battery can be prevented from interfering each other.

Incidentally, reference numerals 35 and 45 designate cords; numeral 121 an O-ring acting as a seal member for sealing the case 109 and the casing 110; and numerals 122 and 123 seal rings acting as seal members for sealing the case 109 and the case 110.

Incidentally, the present invention should not be limited to the foregoing embodiments but could be modified in various manners on the basis of the gist thereof, and these modifications should not be excluded from the scope of the invention.

As has been described in detail hereinbefore, according to the present invention, the automatic transmission comprises: a casing including a transmission mechanism arranged therein and having a through hole; electric parts arranged on the outer side of the casing; electric parts arranged on the inner side of the casing; a sealing wire terminal inserted into the through hole; an electronic control unit arranged in the sealing wire terminal; and cords electrically connecting the electronic control unit and the electric parts.

Moreover, the sealing wire terminal includes a seal member supporting the cords and sealing up the inside and outside of the casing.

Thus, the automatic transmission and the electronic control unit can be arranged close to each other so that they can be combined before they are mounted on the vehicle. As a result, the number of steps for adjustments can be reduced because what is required is to adjust the automatic transmission system as a whole after it is mounted on the vehicle.

Since the automatic transmission and the electronic control unit are arranged close to each other, the cord for connecting the two can be shortened to lower the cost, simplify the wiring lines and lighten the works.

By arranging the electronic control unit in the sealing wiring terminal, moreover, the sealing function of the sealing wire terminal can be utilized to seal the electronic control unit. As a result, no seal member is required for the electronic control unit thereby to reduce the number of parts.

On the other hand, the electronic control unit is arranged in the sealing wire terminal, but the other functional parts are not arranged in the same cases, so that the functional parts need not be taken into consideration when the electronic control unit is replaced. As a result, the workability for replacing the electronic control unit can be improved.

In another automatic transmission of the present invention, the sealing wire terminal includes two cases each having a connection portion for electrically connecting the electronic control unit and the cords.

In this modification, no part is required for fixing the electronic control unit on the sealing wire terminal is required. As a result, the number of parts can be reduced. When the electronic control unit is to be replaced, on the other hand, the electronic control unit can be taken out of the space merely by taking out one case. As a result, the replacing workability of the electronic control unit can be improved.

In still another automatic transmission of the present invention, the electronic control unit is arranged in a space defined by the two cases, and the seal member seals up the inside of the space and the outside of the case.

In this modification, the seal member can seal up not only the inside and outside of the casing but also the inside of the space and the outside of the case so that no seal member is required for sealing up the electronic control unit itself. As a result, the number of parts can be reduced.

## Claims

1. An automatic transmission comprising: a casing (11) including a transmission mechanism arranged therein and having a through hole (21); electric parts arranged on the outer side of said casing (11); electric parts arranged on the inner side of said casing; a sealing wire terminal (22) inserted into said through hole (21); an electronic control unit (37) arranged in said sealing wire terminal; and cords (35, 45) electrically connecting said electronic control unit (37) and said electric parts,
characterized in that said sealing wire terminal (22) supports said cords (35, 45) and includes a seal member which seals the inside from the outside of said casing,
wherein said sealing wire terminal (22) includes two cases (24, 25) each having a connection portion (33; 43, respectively) for electrically connecting said electronic control unit (37) and said cords, and
wherein said electronic control unit (37) is fixed relative to the sealing wire terminal (22) by said connection portions.

2. An automatic transmission according to claim 1, wherein said sealing wire terminal (22) has a fixing means for fixing said electronic control unit (37).

3. An automatic transmission according to claim 1 or 2,
wherein said electronic control unit (37) is arranged in a space defined by said two cases (24, 25), and
wherein said seal member seals up the inside of said space and the outside of said case.

## Patentansprüche

1. Automatisches Getriebe mit: einem Gehäuse (11) mit einem darin angeordneten Getriebemechanismus und mit einem Durchgangsloch (21); elektrischen Teilen, die an der Außenseite des Gehäuses (11) angeordnet sind; elektrischen Teilen, die an der Innenseite des Gehäuses angeordnet sind; einem Dichtkabelanschluß (22), der in das Durchgangsloch (21) eingefügt ist; einer elektronischen Steuereinheit (37), die in dem Dichtkabelanschluß angeordnet ist; und Kabeln (35, 45), die die elektronische Steuereinheit (37) und die elektrischen Teile elektrisch verbinden,
dadurch gekennzeichnet, daß der Dichtkabelanschluß (22) die Kabel (35, 45) stützt und ein Dichtteil aufweist, das die Innenseite gegen die Außenseite des Gehäuses abdichtet,
wobei der Dichtkabelanschluß (22) zwei Gehäuse (24, 25) mit je einem Verbindungsabschnitt (33 bzw. 43) zum elektrischen Verbinden der elektronische Steuereinheit (37) und der Kabel aufweist und
wobei die elektronische Steuereinheit (37) durch die Verbindungsabschnitte relativ zum Dichtkabelanschluß (22) befestigt ist.

2. Automatisches Getriebe nach Anspruch 1,
wobei der Dichtkabelanschluß (22) eine Befestigungseinrichtung zum Befestigen der elektronischen Steuereinheit (37) hat.

3. Automatisches Getriebe nach Anspruch 1 oder 2,
wobei die elektronische Steuereinheit (37) in einem Raum angeordnet ist, der durch die beiden Gehäuse (24, 25) gebildet wird und
wobei das Dichtteil die Innenseite des Raums und die Außenseite des Raums abdichtet.

## Revendications

1. Transmission automatique comportant : un boîtier (11) dans lequel est agencé un mécanisme de transmission et traversé par un trou (21) ; des pièces électriques agencées sur le côté extérieur dudit boîtier (11) ; des pièces électriques agencées du côté intérieur dudit boîtier ; une borne (22) de scellement de fil, insérée dans ledit trou (21) ; une unité de commande électronique (37) agencée dans ladite borne de scellement de fil ; et des câbles (35, 45) reliant électriquement ladite unité (37) de commande électronique et lesdites pièces électriques,
caractérisée en ce que ladite borne (22) de scellement de fil soutient lesdits câbles (35, 45) et comporte un élément d'étanchéité qui rend l'intérieur dudit boîtier étanche par rapport à l'extérieur,
tandis que ladite borne (22) de scellement de fil comporte deux boîtes (24, 25) dotées chacune d'une partie de connexion (33; 43, respectivement) pour relier électriquement ladite unité (37) de commande électronique et lesdits câbles ; et
ladite unité (37) de commande électronique est fixée par rapport à la borne (22) de scellement de fil par lesdites parties de connexion.

2. Transmission automatique selon la revendication 1,
dans laquelle ladite borne (22) de scellement de fil est dotée d'un moyen de fixation permettant de fixer ladite unité (37) de commande électronique.

3. Transmission automatique selon les revendications 1 ou 2,
dans laquelle ladite unité (37) de commande électronique est agencée dans un espace défini par lesdites deux boîtes (24, 25), et
dans laquelle ledit élément d'étanchéité rend étanches l'intérieur dudit espace et l'extérieur de ladite boîte.
